Europäisches Patentamt

European Patent Office

Office européen des brevets

(11) Publication number: **0 326 789**
**A1**

## (12) EUROPEAN PATENT APPLICATION

(21) Application number: 88830036.5

(51) Int. Cl.⁴: **B60B 5/02** , **B29D 31/00**

(22) Date of filing: 02.02.88

(43) Date of publication of application:
09.08.89 Bulletin 89/32

(84) Designated Contracting States:
AT BE CH DE ES FR GB GR IT LI LU NL SE

(71) Applicant: STAMICARBON B.V.
Mijnweg 1
NL-6167 AC Geleen(NL)

(72) Inventor: Pfletschinger, Elmar
Via Prudenziana 10
Como(IT)
Inventor: Wilkinson, Paul
Via Pola 21
Como(IT)

(54) Wheels of a laminate structure.

(57) The invention relates to a wheel of a laminate structure and is characterized in that it is made by winding virtually continuous fibres (4) around a mandrel (1, 1') with a polar winding machine, impregnating the fibres with a thermosetting resin and curing the resin. Preferably the fibers (4) are wound in a partially near-radially, in partially near-circonferentially fashion, and partially in cross-plies.

*fig. 4*

EP 0 326 789 A1

## WHEELS OF A LAMINATE STRUCTURE

The invention relates to wheels of a laminate structure.

The wheels for automotive industry are generally made from steel. Apparently a need for fibre reinforced non-metal wheels exist. These wheels are hand-made by impregnating carbon-cloth. This is a very Labourous and costly process, in which the fibres are not oriented in an optimal way.

The invention solves these problems.

The whell of a laminate structure according to the invention, is characterized in that is is made by winding virtually continuous fibers around a mandrel with a polar winding machine, impregnating the fibres with a thermosetting resin and curing the resin.

The fibres are preferably wound in such a way that they are partially (near) radially, partially near circonferentially and partially in cross-plies. In the part of the wheel that will be (when in use) a vertical position the fibres are (near) radially wound and thus in an optimal position to enforce their strength. More specifically, they can wound somewhat like spokes of a bicycle-wheel. More preferably, the fibers are wound in such a way, that holes are left open and hence that aeration or bolts-holes can be made without destroying fibre reinforcements. The part of the wheel that will be in a horizontal position is strongest in case the fibers are wound (near) circonferential.

From economical point of view it is preferred to make two or more wheels at once.

When making two wheels, two inner mould halves are - separated by 1-2 cm - put on a horizontal axis. At first the polar winding machine winds radially over the complete two halves. Then in a second stage, the horizontal part is winded in a circonferential manner. Now eventual room between the radially wound fibres and the mandrel is closed by the circonferentially wound fibres, and so the gap between the two mould halves is closed too. In case it is wanted two more inner mould parts can be put against the first two mould parts, and some more winding can take place.

As the winding is finished, the outward mould halves can be placed and the fibers can be impregnated by a thermosetting resin, and the resin can be cured. Preferably, the fibers are impregnated by vacuum resin transfer moulding. In the last stage, the two wheels have to be de-moulded and devided.

As fiber reinforcing materials glass fibers, carbon fibers, Kevlar and other fibers, or mixtures thereof can be used.

As thermosetting resin, unsaturated polyester, vinylesterurethane, epoxy and other resins can be used.

The invention will be further elucidated by the examples, without being limited thereto.

### Example

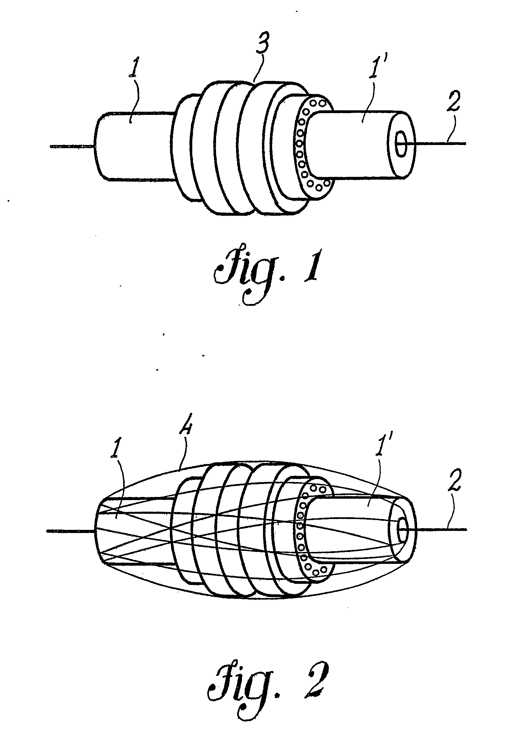

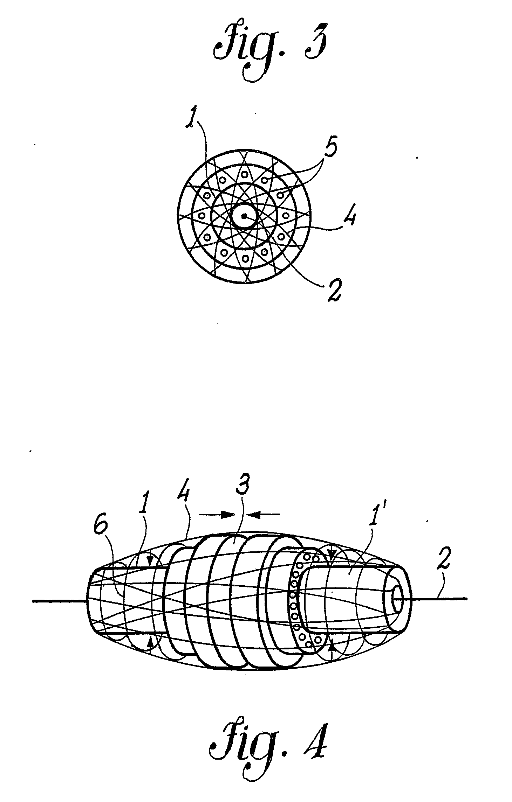

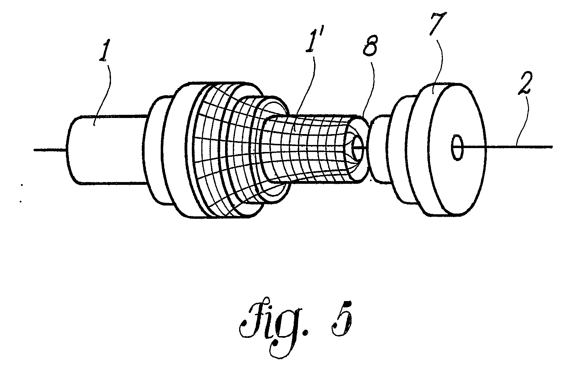

Two inner mould halves (1) and (1') as shown in Fig. 1 were put on an axis (2) separated by 2 cm. With a polar winding machine glass fibres (4) were radially wound as shown in Fig. 2. The winding machine was computer guided in order to get a pattern, schematically shown in Fig. 3. Between the fibers (4) room was left for holes (5). After the radial winding, circonferential winding was started. By pulling fibres (6) and computer guiding of the closing of gap (3), all fibres were pressed against the mandrel (1) and (1'). After finishing, mould parts (7) and (7') were put on the axis (2) with gap (8) and (8') (shown in Fig. 5), and winding started again.

The outward mould half was placed around the inner mould half and by vacuum resin transfer moulding an unsaturated polyester resin prepared from 14,6 parts by weight maleic acid anhydride 24,7 parts by weight of isophthalic acid and 23,8 parts by weight of propylenglycol in 36,7 parts by weight styrene.

The curing took place at 60°C for 10 min.

After de-moulding the double wheel was cut in two and the wheel was de-flashed.

### Claims

1. Wheel of a laminate, characterized in that it is made by winding virtually continuous fibres around a mandrel with a polar winding machine, impregnating the fibres with a thermosetting resin and curing the resin.

2. Wheel according to claim 1, characterized in that the fibers are wound in a partially near-radially, in partially near-circonferentially fashion, and partially in cross-plies.

3. Wheel according to anyone of claims 1-2, characterized in that the radially would fibres are wound in such a way, that room is left for holes in the wheel.

4. Wheel according to anyone of claims 1-3, characterized in that the fibre reinforcement consists of glass fibre, carbon fibre or mixtures thereof.

5. Wheel according to anyone of claims 1-4, characterized in that the thermosetting resin is an unsaturated polyester, vinyl ester urethane, or epoxy resin.

6. Wheel according to anyone of claims 1-5, characterized in that the fibres are impregnated by resin with a vacuum resin transfer moulding.

7. Wheel substantially according to anyone of the claims, the description, examples or figures.

*Fig. 1*

*Fig. 2*

*Fig. 3*

*Fig. 4*

*fig. 5*

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | N.T.I.S. TECHNICAL NOTES, no. 8, August 1985, part F, Filing Code 71F082, Springfield, Virginia, US; "Composite road wheel for tracked vehicles" * Front page, right-hand column, lines 1-5; figure * | 1 | B 60 B 5/02 B 29 D 31/00 |
| X | PATENT ABSTRACTS OF JAPAN, vol. 9, no. 77 (M-369)[1800], 6th April 1985; & JP-A-59 206 201 (HONDA GIKEN KOGYO K.K.) 22-11-1984 * Abstract; figure * | 1,2 | |
| X | US-A-3 917 352 (GAGEBY) * Column 1, line 35 - column 2, line 32; column 3, lines 26-42; column 5, lines 33-63; column 6, line 3 - column 7, line 63; column 8, line 52 - column 9, line 39; column 9, line 60 - column 10, line 4; column 11, lines 38-51; column 12, line 65 - column 13, line 4; figures 1,7-30,33 * | 1,2,3 | |
| Y | | 4,5,6 | TECHNICAL FIELDS SEARCHED (Int. Cl.4) |
| Y | DE-A-3 541 074 (BUDD) * Page 19, lines 24-27; page 21, lines 4-7,19-28 * | 4,5,6 | B 60 B B 29 D F 16 F |
| A | PATENT ABSTRACTS OF JAPAN, vol. 10, no. 242 (M-509)[2298], 21st August 1986; & JP-A-61 72 541 (MAZDA MOTOR CORP.) 14-04-1986 * Abstract; figure * | 1,2 | |
| A | FR-A-2 265 555 (MICHELIN) * Page 3, lines 9-30; figures 2-4 * -/- | 1,3 | |

The present search report has been drawn up for all claims

| Place of search | Date of completion of the search | Examiner |
|---|---|---|
| THE HAGUE | 27-09-1988 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 242 607 (SOCIETE EUROPEENNE) | | |

TECHNICAL FIELDS SEARCHED (Int. Cl.4)

The present search report has been drawn up for all claims

| Place of search | Date of completion of the search | Examiner |
|---|---|---|
| THE HAGUE | 27-09-1988 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)